# EUROPEAN PATENT APPLICATION

(11) **EP 2 252 127 A1**
(43) Date of publication of application: **17.11.2010**
(21) Application number: 10005141.6
(22) Date of filing: 17.05.2010
(51) Int. Cl.: H04W 76/02, H04W 84/04, H04W 74/08, H04W 76/04

(54) **Method of handling radio resource control (RRC) connection re-establishment**

(30) Priority: 15.05.2009 US 178500 P; 22.06.2009 US 218993 P; 18.08.2009 US 234643 P
(71) Applicant: HTC Corporation, Taoyuan County 330 (TW)
(72) Inventor: Jen, Yu-Chih, Taoyuan County Taiwan (TW); Chen, Ten-Ming, Taoyuan County Taiwan (TW)
(74) Representative: Wagner, Karl H.

(57) **Abstract**

A method of handling a radio resource control (RRC) connection reestablishment, in the context of a radio link failure recovery, in a wireless communication system such as 3GPP LTE/SAE includes receiving from a mobile device in a RRC CONNECTED mode a connection re-establishment request message, and sending to the mobile device an enhanced message for rejecting the reestablishment request, whereby the mobile device does not enter a RRC_IDLE mode from the RRC_CONNECTED mode, but further exchanges information with the network in an attempt to keep the connection.

## Description

The present invention relates to a method and apparatus for handling a radio resource control (RRC) connection in a wireless communications system.

A long-term evolution (LTE) system, initiated by the third generation partnership project (3GPP), is now being regarded as a radio access technology of which radio interface and radio network architecture that provides a high data rate, low latency, packet optimization, and improved system capacity and coverage. In the LTE system, an evolved universal terrestrial radio access network (E-UTRAN) includes a plurality of evolved Node-Bs (eNBs) and communicates with a plurality of mobile stations, also referred as user equipments (UEs).

A RRC (Radio Resource Control) connection reestablishment procedure can be initiated by the mobile device for reestablishing a RRC connection. The UE in a RRC_CONNECTED mode initiates the RRC connection reestablishment procedure when any of the following conditions that are well known in the art is met:
(i) upon detecting radio link failure; or
(ii) upon handover failure; or
(iii) upon mobility from E-UTRA (Evolved Universal Terrestrial Radio Access) failure; or
(iv) upon integrity check failure indication from lower layers of the RRC layer; or
(v) upon an RRC connection reconfiguration failure.

A RRC connection reestablishment request message is sent by the UE to initiate the RRC connection reestablishment procedure. The network sends a RRC connection reestablishment message if accepting the request. Accordingly, the UE sends a RRC connection reestablishment complete message after receiving the RRC connection reestablishment message. On the contrary, the network sends a RRC connection reestablishment reject message if not accepting the request. In this situation, the UE releases all radio resources and then enters a RRC_IDLE mode after receiving the RRC connection reestablishment reject message. By this, the RRC connection which the UE attempts to reestablish is eliminated. After entering the RRC_IDLE mode, the UE may perform a RRC establsihment procedure to establish a brand new RRC connection for continuation of a service that may be interrupted by one of the (i)-(v) conditions and thereby cause the UE to initiate the RRC connection reestablishment procedure. However, the foregoing way causes a huge delay of the service recovery of the UE.

This in mind, the present invention aims at providing a method and apparatus for handling a RRC connection that needs to be reestablished, in order to avoid a long delay caused by releasing of all radio resources.

This is achieved by a method and apparatus for handling data decryption for a handling a RRC connection in a wireless communications system according to claims 1, 5 and 8. The dependent claims pertain to corresponding further developments and improvements.

As will be seen more clearly from the detailed description following below, the claimed method for handling a radio resource control (RRC) connection for a network in a wireless communication system includes receiving from a mobile device in a RRC_CONNECTED mode a RRC connection reestablishment request message for requesting reestablishment of a RRC connection of the mobile device, and sending to the mobile device a message for rejecting the reestablishment request, whereby the mobile device does not enter a RRC_IDLE mode from the RRC_CONNECTED mode.

### Brief Description of the Drawings

Fig.1 is a schematic diagram of an examplary wireless communication system.
Fig.2 is a schematic diagram of an examplary communication device.
Fig.3 is a schematic diagram of examplary program code of the communication device according to Fig. 2.
Fig.4-7 are flowcharts of examplary processes.

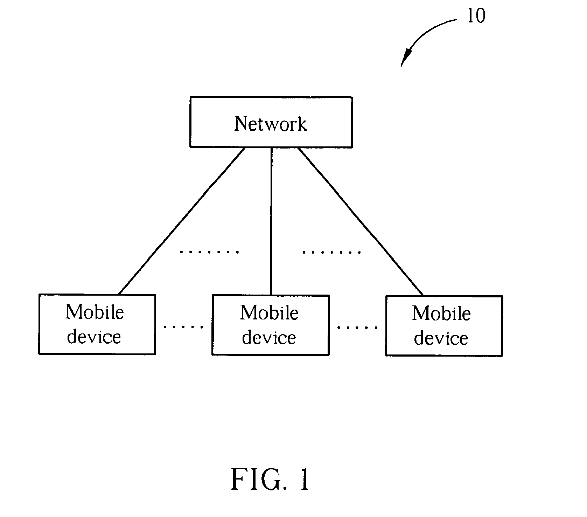

Please refer to FIG. 1, which illustrates a schematic diagram of a wireless communication system 10. Briefly, the wireless communication system 10 is composed of a network and a plurality of mobile devices. The wireless communication system 10 can be a UMTS (Universal Mobile Telecommunications System), an LTE (long-term evolution) system, an LTE-Advance system or any other network system. In the LTE system, the network can include a EUTRAN (evolved-UTRAN) comprising a plurality of eNBs (evolved Node-Bs) controlling cells and a core network entity (e.g. Mobility Management Entity), whereas the mobile devices are referred as to user equipments (UEs). The UEs can be devices such as mobile phones, portable computer systems, etc. This terminology will be used throughout the application for ease of reference, and however, this should not be construed as limiting the invention to any one particular type of network. The network and the UE can be seen as a transmitter or receiver according to transmission direction, e.g., for uplink (UL), the UE is the transmitter and the network is the receiver, and for downlink (DL), the network is the transmitter and the UE is the receiver.

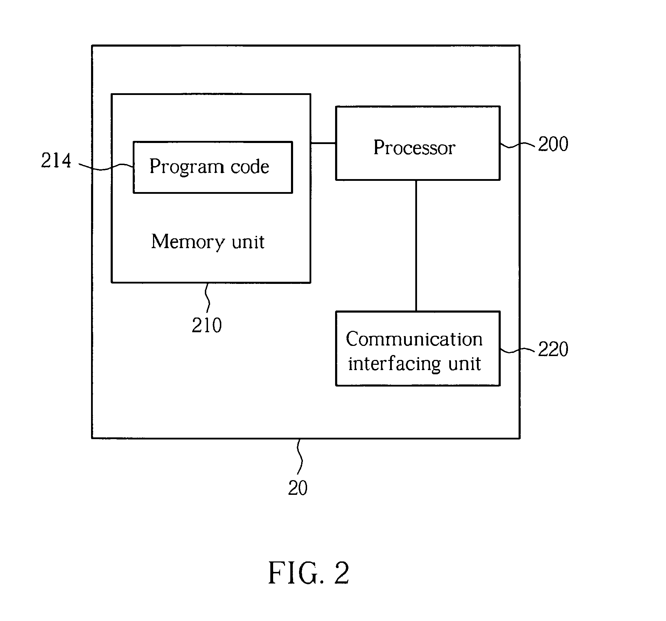

Please refer to FIG. 2, which illustrates a schematic diagram of an examplary communication device 20. The communication device 20 may be the mobile devices or the network shown in FIG. 1 and may include a processing means 200 such as a microprocessor or ASIC (Application-Specific Integrated Circuit), a memory unit 210 and a communication interfacing unit 220. The memory unit 210 may be any data storage device that can store program code 214 for access by the processing means 200. Examples of the memory unit 210 include but are not limited to a subscriber identity module (SIM), read-only memory (ROM), random-access memory (RAM), CD-ROMs, magnetic tapes, hard disks, and optical data storage devices. The communication interfacing unit 220 may be preferably a radio transceiver and accordingly exchanges wireless signals with other communication devices according to processing results of the processing means 200.

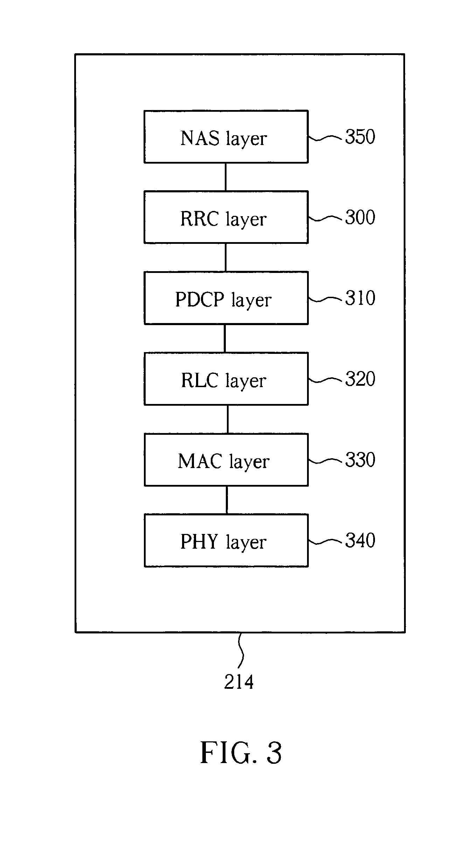

Please refer to Fig. 3, which illustrates a schematic diagram of the program code 214 applied to the LTE system. The program code 214 includes program code of multiple communications protocol layers, which from top to bottom are a non access stratum (NAS) layer 350, a radio resource control (RRC) layer 300, a packet data convergence protocol (PDCP) layer 310, a radio link control (RLC) layer 320, a medium access control (MAC) layer 330 and a physical (PHY) layer 340.

The RRC layer 300 functions to a variety of RRC procedures, e.g. a RRC connection establishment procedure for the purpose of establishing a new RRC connection, a RRC connection reestablishment procedure for the purpose of reestablishing a previously-used RRC connection, and a RRC connection release procedure for the purpose of releasing an in-use RRC connection and related radio resources. A variety of definable RRC messages and information elements (IEs) thereof are exchanged between the communication device 20 and peer communication device for RRC configuration. When the communication device 20 is a mobile device, the RRC layer 300 may set the communication device 20 to a RRC_CONNECTED mode allowing transfer of unicast data with RRC connections or to a RRC_IDLE mode putting the communication device 20 in a power-saving state without any unicast data transfer.

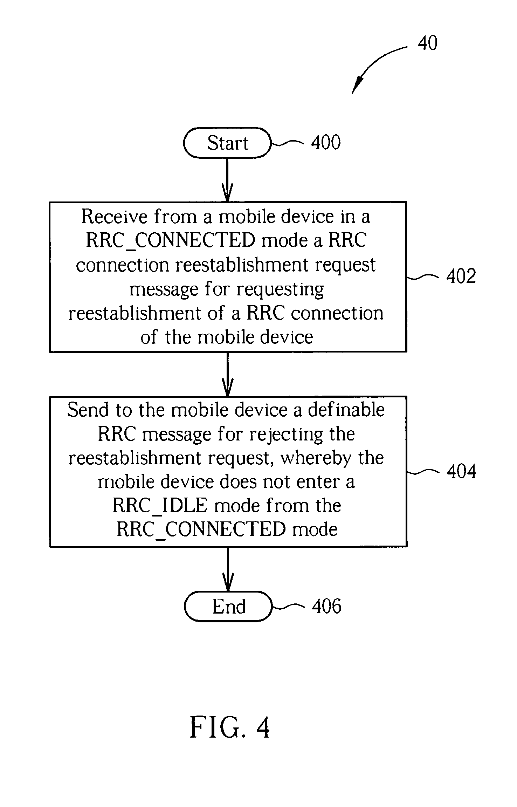

Please refer to FIG. 4, which is a flowchart of an examplary process 40 that is used for handling a RRC connection for a network in a wireless communication system (e.g. the network of the wireless communication system 10). The process 40 may be compiled into the program code 214 and includes the following steps:
- Step 400:: Start.
- Step 402:: Receive from a mobile device in a RRC_CONNECTED mode a RRC connection reestablishment request message for requesting reestablishment of a RRC connection of the mobile device.
- Step 404:: Send to the mobile device a definable RRC message for rejecting the reestablishment request, whereby the mobile device does not enter a RRC_IDLE mode from the RRC_CONNECTED mode.
- Step 406:: End.

According to the process 40, the network receives a RRC connection reestablishment request message of a RRC connection reestablishment procedure and thereby knows that the mobile device in the RRC_CONNECTED mode requests the network to help the reestablishment of the RRC connection of the mobile device. The network does not accept the request for reestablishment and thereby, in response to the RRC connection reestablishment request message, sends to the mobile device the definable RRC message indicating that the reestablishment request is not accepted by the network. In addition, the mobile device remains staying in the RRC_CONNECTED mode when receiving the definable RRC message. In other words, the mobile device does not enter the RRC_IDLE mode when the request for RRC connection reestablishment is rejected by the network via the definable RRC message. This means that the mobile device does not need to establish a new RRC connection in the RRC_IDLE mode.

The network may send the definable RRC message when the network fails in an integrity check of integrity information obtained from the RRC connection reestablishment request message. For example, the mobile device of the LTE system includes a short MAC identity in the RRC connection reestablishment request message for integrity check, and the network can verify validity of the mobile device by checking the received short MAC identity via a predetermined integrity algorithm or not. If the short MAC identity fails in the checking, the network sends the definable RRC message to the mobile device which is considered invalid. In addition, the network may also send the definable RRC message when the network determines that a confusion of a physical cell identity (PCI) indicated by the RRC connection reestablishment request message occurs. In the LTE system, a PCI is assigned to all LTE cells, serving as a cell signature. The mobile device includes the PCI of its original cell (source cell) in the RRC connection reestablishment request message for notifying the target cell of which cell mobile device moves from. The PCI confusion occurs when any of the following conditions is met:
(i) when the PCI of the source cell is identical to the PCI of the target cell; or
(ii) when the PCI of the target cell is identical to any other cell in the network; or
(iii) when the PCI of the source cell is unknown by the target cell.

The network may not be able to know exactly which cell the mobile device moves from due to the PCI confusion and thereby rejects the request for RRC connection reestablishment by the definable RRC message to avoid potential problems of configuring all mobile devices in coverage of the target cell, e.g. the network confuses the mobile device with another mobile device due to the PCI confusion and thereby configures the two mobile devices in the same way. The RRC connection reestablishment procedure may be performed with cooperation of a random access (RA) procedure that helps the mobile device obtains the initial access and uplink synchronization to the target cell. In this situation, the RRC connection reestablishment request message is considered a message 3 of the RA procedure, whereas the definable RRC message is considered a message 4. In addition, the definable RRC message may be a RRC connection setup message of a RRC connection establishment procedure or a newly-defined RRC connection reestablishment reject message. In this situation, when a RRC connection setup complete message corresponding to the RRC connection setup message or a RRC connection reestablishment complete message corresponding to the newly-defined RRC connection reestablishment reject message is received, the network may further perform a definable RRC or NAS procedure for fetching a context of the mobile device from the backhaul part of the network (e.g. a core network) to know a variety of operating information of the mobile device, e.g. subscriber information, a S-TMISI (serving temporary mobile subscriber identity), what radio bearers the mobile device has before the RRC connection reestablishment procedure, etc). The network initiates a resource releasing procedure for indicating to the mobile device to release the resources used for the RRC connection when the definable RRC/NAS procedure is failed. In the resource releasing procedure, the network may notify the mobile device of a release cause indicating that the S-TMSI not valid. On the contrary, the network performs another definable RRC or NAS procedure for continuity of a service associated with the RRC connection when the network successfully fetches the context. The service is originally enjoyed by the mobile device right before the RRC connection reestablishment procedure, and thereby needs to be recovered.

In addition, the network may determine whether to initiate the abovementioned procedure for service continuity depended on validity of the S-TMISI that the mobile device sends after receiving the definable RRC message. The network may perform the procedure for releasing all radio resources of the mobile device when the S-TMSI is accepted after the network checks the S-TMSI. On the contrary, the network initiates the definable procedure for service continuity when the S-TMSI is not accepted (invalid).

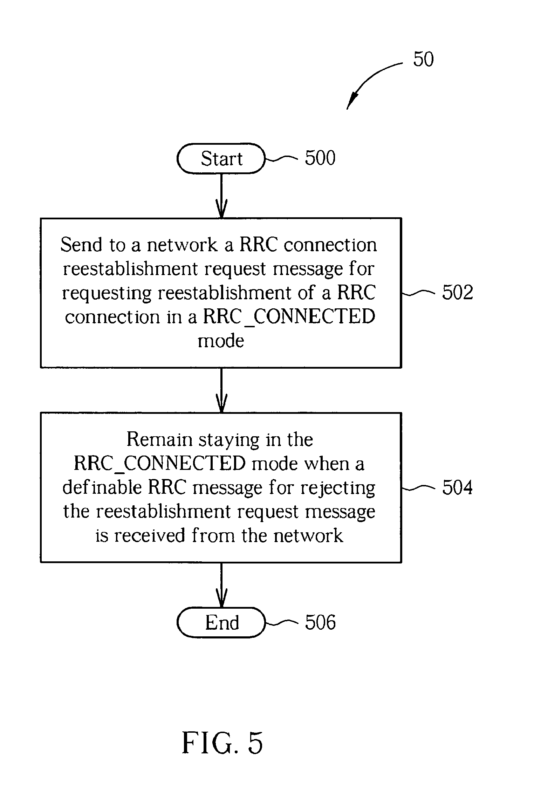

Please refer to FIG. 5, which is a flowchart of an examplary process 50 that is used for handling a RRC connection for a mobile device in a wireless communication system (e.g. the network of the wireless communication system 10). The process 50 may be compiled into the program code 214 and includes the following steps:
- Step 500:: Start.
- Step 502:: Send to a network a RRC connection reestablishment request message for requesting reestablishment of a RRC connection in a RRC_CONNECTED mode.
- Step 504:: Remain staying in the RRC_CONNECTED mode when a definable RRC message for rejecting the reestablishment request message is received from the network.
- Step 506:: End.

According to the process 50, the mobile device that has the RRC connection with the network in the RRC_CONNECTED mode sends the RRC connection reestablishment request message to the network for requesting connection reestablishment. The RRC connection reestablishment request message may be sent when the RRC connection is interrupted due to bad radio condition or needs to be handed over, which is well known in the art. The mobile device remains staying in the RRC_CONNECTED mode when the definable RRC message is received. In other words, the mobile device does not enter the RRC_IDLE mode when the request for RRC connection reestablishment is rejected by the network. Details of the definable RRC message can refer to the description of the process 40.

When the definable RRC message is received, the mobile device may further release all the radio resources and configuration, which the mobile device uses before the sending of the RRC connection reestablishment request message. In addition, the mobile device may start a timer providing a valid period of receiving the definable RRC message, at the time the RRC connection reestablishment request message is sent. The timer is stopped when the definable RRC message is received. If the timer expires and no definable RRC message is received, the mobile device may release all radio resources and enters the RRC_IDLE mode. In the LTE system, the timer may be T301. Moreover, the mobile device may establish/reestablish a radio bearer associated with the RRC connection or with a new RRC connection according to the definable RRC message. For example, the mobile device uses a signaling radio bearer SRB1 for data transfer of the RRC connection and the SRB1 cannot work normally due to problems of the RRC connection. Then, the mobile device sends the RRC connection reestablishment request message and receives the definable RRC message. A new SRB1 is then established based on the configuration content of the definable RRC message.

A procedure for continuity of a service associated with the RRC connection may also need to be performed after the mobile device receives the definable RRC message. For example, when the definable RRC message is a RRC connection setup message/RRC connection reestablishment reject message, the mobile device may indicate this situation to an upper layer of the RRC layer (e.g. the NAS layer). If the NAS layer attempts to continue the service, the RRC layer is instructed by the NAS layer to send a RRC connection setup complete message/RRC connection reestablishment complete message to the network to initiate the procedure for service continuity. The RRC connection setup complete message/RRC connection reestablishment complete message may include the S-TMSI of the mobile device. In addition, the RRC connection setup complete message may not include any non access stratum (NAS) information of the mobile device. For the LTE system, the RRC connection setup complete message may not include a "NAS-Dedicatedlnformation" IE or may include the "NAS-Dedicatedlnformation" IE whose content is 'NULL' (e.g. all '0' bits).

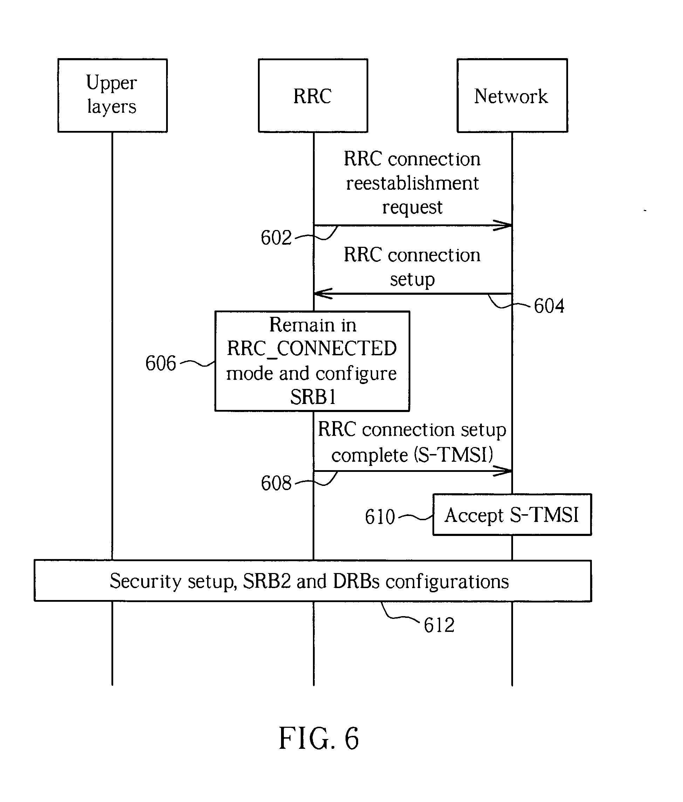

Please refer to FIG. 6, which is a sequence diagram of an examplary process 60 that is used for handling a RRC connection between the mobile device and the network in a wireless communication system. In Step 602, a RRC layer of the mobile device in the RRC_CONNECTED mode sends a RRC connection reestablishment request message to initiate a RRC connection reestablishment procedure. For rejecting the request of the RRC connection reestablishment request message, the network sends a RRC connection setup message for requesting establishment of a new RRC connection in Step 604. This can be considered that the mobile device is directed to the RRC connection establishment procedure when the RRC connection reestablishment request is rejected, without entering the RRC_IDLE mode. In Step 606, the mobile device remains staying in the RRC_CONNECTED mode and further configures a SRB1 (signaling radio bearer 1) according to the RRC connection setup message. Via SRB1, the RRC layer of the mobile device sends a RRC connection setup complete message including an S-TMSI of the mobile device in Step 608 to confirm the successful completion of the RRC connection establishment. The network verifies the S-TMSI and thereby determines that the mobile device is valid when the S-TMSI passes the verification. As shown in Step 610, the network accepts the S-TMSI. After this, the network setups security and configures a SRB2 (signaling Radio Bearer 2) and DRBs (Data Radio Bearers) to the mobile device for service continuity. The RRC layer and related upper layer (e.g. NAS layer) establish the SRB2 and DRBs to transfer the service signaling/data. As can be seen in Fig. 6, the RRC setup message functions to reject the reestablishment of the RRC connection and also request the mobile device to establish a new RRC connection. As a result, the mobile device does not need to enter the RRC_IDLE mode within the period from the RRC connection reestablishment procedure to the procedure for service continuity. Thus, the mobile device can take less time to have the service recovered and thereby the user can enjoy the service with less delay/interruption period.

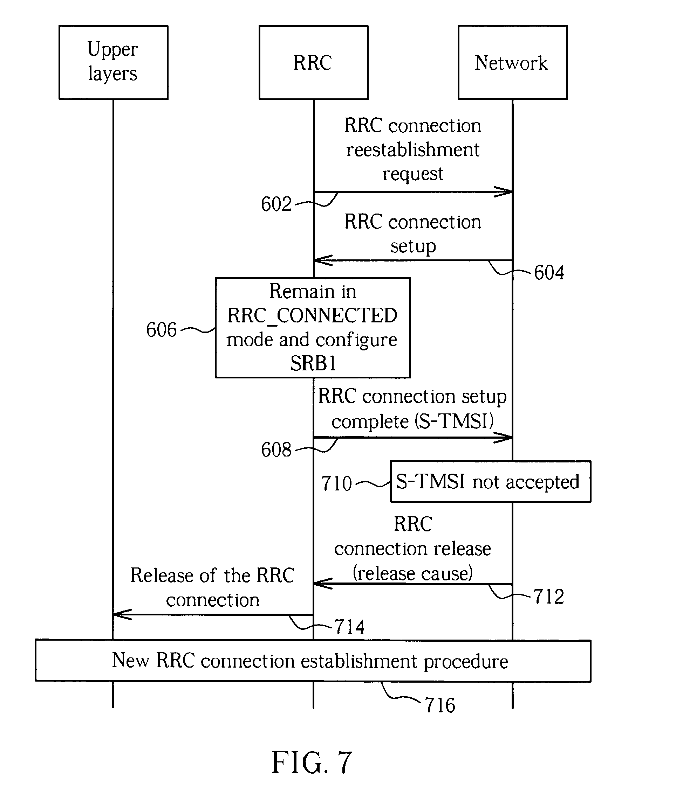

Please refer to FIG. 7, which is a sequence diagram of an examplary process 70 that shows the case of invalid S-TMSI compared with the process 60. In the process 70, the same steps as those in Fig. 6 are labeled the same step numbers. In Step 710, the S-TMSI of the mobile device does not succeed in validity checking and thereby the network does not accept the S-TMSI. The network then sends a RRC connection release message to reject the establishment request of the new RRC connection. The RRC connection release message includes a release cause indicating to the mobile device that the S-TMSI is invalid. The RRC layer of the mobile device releases radio resources and may convey the release cause to the upper layer to inform the release of the RRC connection. Then, the mobile device initiates and performs another RRC connection establishment procedure with the network.

Please note that the abovementioned steps including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20 in which the processor 200 processes the program code 214 related to the abovementioned processes, the processed results of which can handle a RRC connection that needs to be reestablished.

In conclusion, the abovementioned examples prevent the mobile device from entering the RRC_IDLE mode when the request for RRC connection reestablishment is rejected by the network. Note that entering the RRC_IDLE mode herein means that the mobile device releases all radio resources and has to redo all necessary RRC configurations if attempting a new RRC connection. Thus, a long delay caused by establishment of the new RRC connection under the RRC_IDLE mode can be avoided, thereby reducing the delay for service continuity.

## Claims

1. A method of handling radio resource control, hereinafter called RRC, connection for a network in a wireless communication system, **characterized by** the method comprising:
receiving from a mobile device in a RRC_CONNECTED mode a RRC connection reestablishment request message for requesting reestablishment of a RRC connection of the mobile device (402); and
sending to the mobile device a message for rejecting the reestablishment request, whereby the mobile device does not enter a RRC_IDLE mode from the RRC_CONNECTED mode (404).

2. The method of claim 1, **characterized in that** sending to the mobile device the message for rejecting the reestablishment request is sending to the mobile device the message for rejecting the reestablishment request when the network fails in an integrity check of integrity information obtained from the RRC connection reestablishment request message or when the network determines that a confusion of a physical cell identity indicated by the RRC connection reestablishment request message occurs.

3. The method of claim 1, **characterized in that** the message is a RRC connection setup message or is a message 4 of a random access procedure when the RRC connection reestablishment request message is a message 3 of the random access procedure or is a RRC connection reestablishment reject message.

4. The method of claim 3 further comprising:
performing a first procedure for fetching a context of the mobile device corresponding to the resources used for the RRC connection when a RRC connection setup complete message corresponding to the RRC connection setup message or a RRC connection reestablishment complete message corresponding to the RRC connection reestablishment reject message is received from the mobile device;
performing a second procedure for continuity of a service associated with the RRC connection when the network successfully fetches the context via the first procedure; and
initiating a third procedure for indicating to the mobile device to release the resources used for the RRC connection when the first procedure is failed; or
further comprising:
checking a serving temporary mobile subscriber identity, hereinafter called S-TMSI, when the S-TMSI is received from the mobile device;
performing the second procedure when the S-TMSI is accepted after the checking of the S-TMSI; and
initiating the third procedure when the S-TMSI is not accepted after the checking of the S-TMSI.

5. A method of handling radio resource control, hereinafter called RRC, connection for a mobile device in a wireless communication system, **characterized by** the method comprising:
in a RRC_CONNECTED mode, sending to a network a RRC connection reestablishment request message for requesting reestablishment of a RRC connection (502); and
remaining staying in the RRC_CONNECTED mode when a message for rejecting the reestablishment request message is received from the network (504).

6. The method of claim 5 further comprising at least one of the following steps:
releasing radio resources and configuration used before the sending of the RRC connection reestablishment request message when the message is received;
stopping a timer that provides a valid period of receiving the message and is started at the time the RRC connection reestablishment request message is sent, when the message is received;
establishing a radio bearer associated with the RRC connection according to the message; and
performing a procedure for continuity of a service associated with the RRC connection.

7. The method of claim 6, **characterized in that** performing the procedure for the continuity of the service associated with the RRC connection comprises:
sending a RRC connection setup complete message or a RRC connection reestablishment complete message to the network, wherein the RRC connection setup complete message or the RRC connection reestablishment complete message includes a serving temporary mobile subscriber identity, hereinafter called S-TMSI, of the mobile device, and the RRC connection setup complete message does not include any non access stratum, hereinafter called NAS, information of the mobile device.

8. A communication device (20) of a wireless communication system (10) for handling radio resource control, hereinafter called RRC, connection, **characterized by** the communication device (20) comprising:
means for receiving from a mobile device in a RRC_CONNECTED mode a RRC connection reestablishment request message for requesting reestablishment of a RRC connection of the mobile device; and
means for sending to the mobile device a message for rejecting the reestablishment request, whereby the mobile device does not enter a RRC_IDLE mode from the RRC_CONNECTED mode.

9. The communication device (20) of claim 8, **characterized in that** the means for sending to the mobile device the message for rejecting the reestablishment request sends to the mobile device the message for rejecting the reestablishment request when the network fails in an integrity check of integrity information obtained from the RRC connection reestablishment request message or when the network determines that a confusion of a physical cell identity indicated by the RRC connection reestablishment request message occurs.

10. The communication device (20) of claim 8, **characterized in that** the message is a RRC connection setup message or is a message 4 of a random access procedure when the RRC connection reestablishment request message is a message 3 of the random access procedure or is a RRC connection reestablishment reject message.

11. The communication device (20) of claim 10 further comprising:
means for performing a first procedure for fetching a context of the mobile device corresponding to the resources used for the RRC connection when a RRC connection setup complete message corresponding to the RRC connection setup message or a RRC connection reestablishment complete message corresponding to the RRC connection reestablishment reject message is received from the mobile device;
means for performing a second procedure for continuity of a service associated with the RRC connection when the network successfully fetches the context via the first procedure; and
means for initiating a third procedure for indicating to the mobile device to release the resources used for the RRC connection when the first procedure is failed; or
further comprising:
means for checking a serving temporary mobile subscriber identity , hereinafter called S-TMSI, when the S-TMSI is received from the mobile device;
means for performing the second procedure when the S-TMSI is accepted after the checking of the S-TMSI; and
means for initiating the third procedure when the S-TMSI is not accepted after the checking of the S-TMSI.
